# EUROPEAN PATENT SPECIFICATION

(11) **EP 4 101 747 B1**
(45) Date of publication and mention of the grant of the patent: **04.10.2023**
(21) Application number: 22154742.5
(22) Date of filing: 02.02.2022
(51) Int. Cl.: B62J 25/06, B62K 11/04, B62K 19/06

(54) **STRADDLED VEHICLE**
GRÄTSCHSITZFAHRZEUG
VÉHICULE À ENFOURCHER

(30) Priority: 08.06.2021 JP 2021095511
(43) Date of publication of application: 14.12.2022
(73) Proprietor: YAMAHA HATSUDOKI KABUSHIKI KAISHA, Iwata-shi Shizuoka 438-8501 (JP)
(72) Inventor: Nohara, Takahiro, Iwata-shi, Shizuoka-ken (JP)
(74) Representative: Grünecker Patent- und Rechtsanwälte PartG mbB

(56) References cited:
- JP-A- H0 427 683
- JP-A- H01 111 592
- JP-A- H06 329 066
- US-A1- 2008 238 032
- US-A1- 2009 230 654
- US-A1- 2014 263 506
- US-A1- 2018 339 739

## Description

The present invention relates to a straddled vehicle according to the preamble of independent claim 1. Such a straddled vehicle can be taken from the prior art document JP H06-329066 A.

A straddled vehicle has been known in the art that includes a left seat frame and a right seat frame supporting a seat, and a tandem foot rest unit supported on the left seat frame and the right seat frame, as disclosed in JP 2018-199405 A, for example. The tandem foot rest unit includes a left bracket secured to the left seat frame by a bolt, a right bracket secured to the right seat frame by a bolt, a left tandem foot rest supported on the left bracket, and a right tandem foot rest supported on the right bracket.

With the straddled vehicle described above, the left tandem foot rest and the right tandem foot rest need to be attached separately to the left seat frame and the right seat frame each using a bracket. In some cases, this increased the size of the structure for attaching the left tandem foot rest and the right tandem foot rest. When removing the left tandem foot rest and the right tandem foot rest, they need to be removed separately.

JP H06-329066 A discloses a straddled vehicle in which the left tandem foot rest, the left bracket, the right tandem foot rest and the right bracket are integrated with a part of the rear fender. With this straddled vehicle, the left tandem foot rest and the right tandem foot rest are integrated with each other, together with the left and right brackets and the part of the rear fender. The left tandem foot rest and the right tandem foot rest can together be attached to the left seat frame and the right seat frame. When removing the left tandem foot rest and the right tandem foot rest, they can together be removed.

With the straddled vehicle disclosed in JP H06-329066 A, however, when the left tandem foot rest and the right tandem foot rest are attached to the left seat frame and the right seat frame, the part of the rear fender also needs to be attached together. When the left tandem foot rest and the right tandem foot rest are removed, the part of the rear fender also needs to be removed together. This makes it more troublesome to attach/remove the left tandem foot rest and the right tandem foot rest.

An object of the present invention is to provide a straddled vehicle, with which it is possible to prevent the structure for attaching the left tandem foot rest and the right tandem foot rest from becoming larger, and it is easy to attach/remove the left tandem foot rest and the right tandem foot rest. According to the present invention said object is solved by a straddled vehicle having the features of independent claim 1. Preferred embodiments are laid down in the dependent claims.

A straddled vehicle disclosed herein includes: a left seat frame extending rearward and upward; a right seat frame arranged rightward of the left seat frame and extending rearward and upward; a seat supported on the left seat frame and the right seat frame; and a tandem foot rest unit supported on the left seat frame and the right seat frame for supporting feet of a passenger who sits in the seat. The tandem foot rest unit includes: a bracket including a left end portion and a right end portion and attachably/removably supported on the left seat frame and the right seat frame; a left tandem foot rest supported on the left end portion of the bracket; and a right tandem foot rest supported on the right end portion of the bracket.

With the straddled vehicle described above, the left tandem foot rest and the right tandem foot rest are supported on a common bracket. As compared with a case where separate brackets are provided for the left tandem foot rest and for the right tandem foot rest, it is possible to reduce the number of components and reduce the size of the configuration. With the straddled vehicle described above, only by attaching/removing the bracket to/from the left seat frame and the right seat frame, the left tandem foot rest and the right tandem foot rest can be attached/removed together. This makes it easier to attach/remove the left tandem foot rest and the right tandem foot rest.

The straddled vehicle includes a plate secured to the left seat frame and the right seat frame. The bracket is removably attached to the plate.

Thus, the bracket is secured to the left seat frame and the right seat frame with the plate therebetween. The bracket can be attached/removed to/from the left seat frame and the right seat frame only by attaching/removing the bracket to/from the plate. This makes it easier to attach/remove the bracket.

The plate is arranged downward of the left seat frame and the right seat frame, and is arranged parallel to the left seat frame and the right seat frame as the vehicle is viewed from the side.

Thus, the plate does not protrude downward. Therefore, it is possible to arrange the tandem foot rest unit in a compact arrangement. When the tandem foot rest unit is removed by removing the bracket from the plate, it is possible to ensure a sufficient space downward of the left seat frame and the right seat frame.

The bracket may be secured to the plate by a bolt. The bolt may extend upward.

Thus, the bolt for securing the bracket does not protrude left and right. Therefore, it is possible to arrange the tandem foot rest unit in a compact arrangement.

A hole may be formed in a central portion of the plate.

Thus, it is possible to reduce the weight of the plate. It is possible to reduce the weight of the tandem foot rest unit.

The bracket may cover the hole of the plate from below.

Thus, the bracket can prevent mud, etc., rolled up from the road surface from passing through the hole of the plate to enter the space above.

The straddled vehicle may include: an electrical part supported on the left seat frame and the right seat frame; and a secure bolt that secures the electrical part. A portion of the secure bolt may be arranged inside the hole of the plate.

Thus, the plate does not need to be arranged more downward in order to avoid the secure bolt. Therefore, it is possible to arrange the tandem foot rest unit in a compact arrangement.

The straddled vehicle may include an electrical part supported on the left seat frame and the right seat frame. The bracket may be arranged rearward and downward of the electrical part.

Thus, the bracket can prevent mud, etc., rolled up from the road surface from sticking to the electrical part.

The bracket may include a central portion located rightward of the left end portion of the bracket and leftward of the right end portion of the bracket. The central portion may be recessed upward relative to the left end portion and the right end portion.

Thus, it is possible to ensure a sufficient clearance between the rear wheel, which is arranged rearward and downward of the left seat frame and the right seat frame, and the bracket.

An entirety of the bracket may overlap with the seat as the vehicle is viewed from above.

Thus, since the bracket does not protrude leftward and rightward, it is possible to arrange the tandem foot rest unit in a compact arrangement.

The tandem foot rest unit may include: a left link shaft rotatably linking the left tandem foot rest to the left end portion of the bracket; and a right link shaft rotatably linking the right tandem foot rest to the right end portion of the bracket. The left tandem foot rest and the right tandem foot rest may be configured to be rotatable between a retracted position, in which the left tandem foot rest and the right tandem foot rest extend rearward, and a deployed position, in which the left tandem foot rest and the right tandem foot rest extend sideward.

Thus, when no passenger rides, the left tandem foot rest and the right tandem foot rest can be retracted in the retracted position so that the left tandem foot rest and the right tandem foot rest no longer interfere. When a passenger rides, the left tandem foot rest and the right tandem foot rest can be deployed in the deployed position so that the passenger can rest the feet on the left tandem foot rest and the right tandem foot rest.

When the left tandem foot rest and the right tandem foot rest are in the retracted position, an entirety of the left tandem foot rest and an entirety of the right tandem foot rest may overlap with the seat as the vehicle is viewed from above.

Thus, when the left tandem foot rest and the right tandem foot rest are retracted in the retracted position, the left tandem foot rest does not protrude leftward relative to the seat, and the right tandem foot rest does not protrude rightward relative to the seat. The left tandem foot rest and the right tandem foot rest are unlikely to interfere.

The left tandem foot rest may include a rod-shaped left arm portion connected to the left link shaft, a left footrest portion for resting a foot of the passenger, and a left stepped portion located between the left arm portion and the left footrest portion. The right tandem foot rest may include a rod-shaped right arm portion connected to the right link shaft, a right footrest portion for resting a foot of the passenger, and a right stepped portion located between the right arm portion and the right footrest portion. The left stepped portion may extend downward from the left arm portion toward the left footrest portion when the left tandem foot rest is in the deployed position. The right stepped portion may extend downward from the right arm portion toward the right footrest portion when the right tandem foot rest is in the deployed position.

Thus, with the left stepped portion, it is possible to prevent the left foot of the passenger resting on the left footrest portion from moving onto the left arm portion. With the right stepped portion, it is possible to prevent the right foot of the passenger resting on the right footrest portion from moving onto the right arm portion. Therefore, it is easy for the passenger to maintain a proper posture.

When the left tandem foot rest and the right tandem foot rest are in the retracted position, the left arm portion may be arranged parallel to the left seat frame and the right arm portion may be arranged parallel to the right seat frame as the vehicle is viewed from the side.

Thus, the left tandem foot rest and the right tandem foot rest can be retracted in a compact arrangement.

A length of the left tandem foot rest may be longer than a distance between a vehicle center line and a left end of the bracket as the vehicle is viewed from above. A length of the right tandem foot rest may be longer than a distance between the vehicle center line and a right end of the bracket as the vehicle is viewed from above.

Thus, since the left tandem foot rest and the right tandem foot rest are long, it is easy for the passenger to rest the feet on the left tandem foot rest and the right tandem foot rest. It is easy for the passenger to take a proper posture.

The straddled vehicle may include: a rear wheel; and a rear fender at least a portion of which is located upward of the rear wheel. The rear fender may be arranged rearward relative to the bracket and spaced apart from the bracket.

### Advantageous Effects Of Invention

According to the present invention, it is possible to provide a straddled vehicle, with which it is possible to prevent the structure for attaching the left tandem foot rest and the right tandem foot rest from becoming larger, and it is easy to attach/remove the left tandem foot rest and the right tandem foot rest.

### BRIEF DESCRIPTION OF THE DRAWINGS

FIG. 1 is a left side view showing a motorcycle according to an embodiment.
FIG. 2 is a left side view showing a seat frame and a tandem foot rest unit.
FIG. 3 is a back view showing the seat frame and the tandem foot rest unit.
FIG. 4 is a bottom view showing the seat frame and the tandem foot rest unit.
FIG. 5 is a perspective view showing the tandem foot rest unit, etc., when left and right tandem foot rests are in the retracted position.
FIG. 6 is a perspective view showing the tandem foot rest unit, etc., when the left and right tandem foot rests are in the deployed position.
FIG. 7 is a view similar to FIG. 4, except that the tandem foot rest unit is removed.
FIG. 8 is a view similar to FIG. 2, except that the tandem foot rest unit is removed.
FIG. 9 is a partial cross-sectional view showing a cross section taken along the vehicle center line of the motorcycle.
FIG. 10 is a perspective view showing the left tandem foot rest in the deployed position.
FIG. 11 is a partial plan view showing the motorcycle when the left and right tandem foot rests are in the deployed position.
FIG. 12 is a partial plan view showing the motorcycle when the left and right tandem foot rests are in the retracted position.

### DETAILED DESCRIPTION OF THE PREFERRED EMBODIMENTS

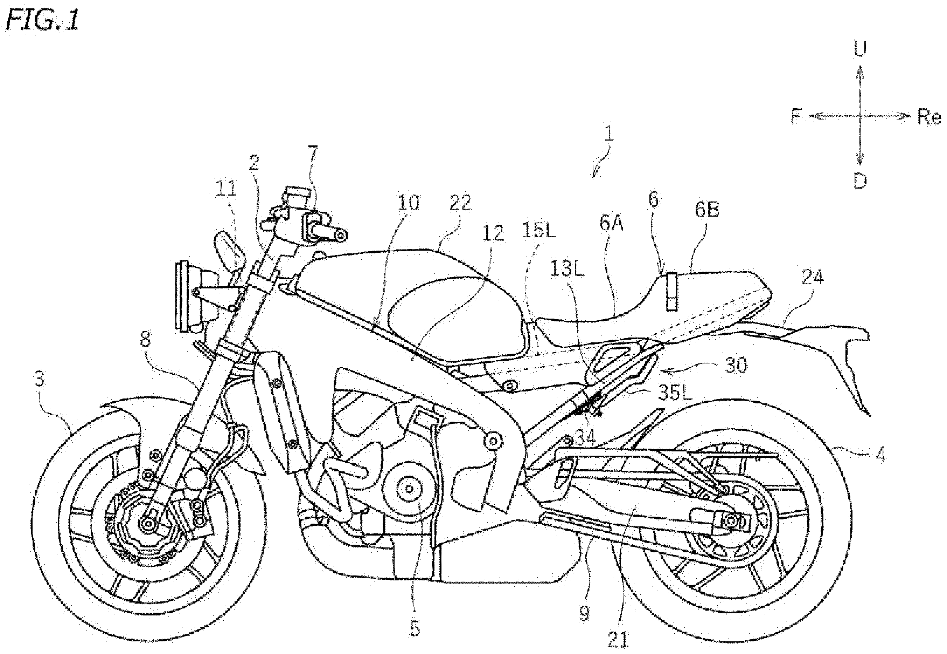

An embodiment will now be described with reference to the drawings. As shown in FIG. 1, a straddled vehicle according to the present embodiment is a motorcycle 1. The motorcycle 1 includes a vehicle body frame 10, a front wheel 3, a rear wheel 4, an internal combustion engine 5, a seat 6 and a tandem foot rest unit 30.

The terms front, rear, left, right, up and down, as used in the description below, refer to these directions as seen from a virtual rider (not shown) seated on the seat 6 while the motorcycle 1 is standing upright on a horizontal surface with no rider and no load thereon, unless specified otherwise. The designations F, Re, L, R, U and D, as used in the figures, refer to front, rear, left, right, up and down, respectively. In particular, it is referred to a front-rear vehicle direction F-Re, a left-right vehicle direction L-R and an up-down vehicle direction U-D.

The term "forward" refers not only to the direction that extends horizontally forward along the vehicle center line CL, but also to directions that are inclined from that direction by an angle that is less than 90 degrees. The term "rearward" refers not only to the direction that extends horizontally rearward along the vehicle center line CL, but also to directions that are inclined from that direction by an angle that is less than 90 degrees. The term "leftward" refers not only to the direction that extends leftward horizontally along a line perpendicular to the vehicle center line CL, but also to directions that are inclined from that direction by an angle that is less than 90 degrees. The term "rightward" refers not only to the direction that extends rightward horizontally along a line perpendicular to the vehicle center line CL, but also to directions that are inclined from that direction by an angle that is less than 90 degrees. The term "upward" refers not only to the direction that extends upward along the vertical line, but also to directions that are inclined from that direction by an angle that is less than 90 degrees. The term "downward" refers not only to the direction that extends downward along the vertical line, but also to directions that are inclined from that direction by an angle that is less than 90 degrees.

The vehicle body frame 10 includes a head pipe 11, a left and a right main frame 12 extending rearward from the head pipe 11, a left seat frame 15L extending rearward and upward from the left main frame 12, a right seat frame 15R extending rearward and upward from the right main frame 12, a left seat frame 13L extending rearward and upward from the left main frame 12, and a right seat frame 13R extending rearward and upward from the right main frame 12.

The right seat frame 15R is arranged rightward of the left seat frame 15L. The right seat frame 13R is arranged rightward of the left seat frame 13L. The left seat frame 13L is arranged downward of the left seat frame 15L. The right seat frame 13R is arranged downward of the right seat frame 15R. The front end portion of the left seat frame 13L is arranged downward relative to the front end portion of the left seat frame 15L. The rear end portion of the left seat frame 13L is connected to the middle portion of the left seat frame 15L. The front end portion of the right seat frame 13R is arranged downward relative to the front end portion of the right seat frame 15R. The rear end portion of the right seat frame 13R is connected to the middle portion of the right seat frame 15R.

A steering shaft 2 is supported on the head pipe 11 so that the steering shaft 2 can rotate left and right. A handle bar 7 is secured to an upper portion of the steering shaft 2. A front fork 8 is secured to a lower portion of the steering shaft 2. The front fork 8 rotatably supports the front wheel 3.

The internal combustion engine 5 is an example of a drive source that generates the driving force for running the motorcycle 1. The internal combustion engine 5 is supported on the vehicle body frame 10. The internal combustion engine 5 is linked to the rear wheel 4 via a power transmission member such as a chain 9. The rear wheel 4 is an example of a driving wheel to which the power of the drive source is transmitted. The front end portion of a rear arm 21 is pivotally linked to the main frame 12. The rear wheel 4 is rotatably supported on the rear end portion of the rear arm 21.

A fuel tank 22 is arranged rearward of the head pipe 11 and upward of the internal combustion engine 5. The seat 6 is arranged rearward of a fuel tank 22. The seat 6 is supported on the left seat frames 13L and 15L and the right seat frames 13R and 15R. The seat 6 includes a rider seat 6A for seating the rider and a tandem seat 6B for seating the passenger. The tandem seat 6B is located rearward of the rider seat 6A. While the rider seat 6A and the tandem seat 6B may be separate parts, they are an integral part in the present embodiment. Note that the rider refers to a person who drives the motorcycle 1. The passenger refers to a person who does not drive the motorcycle 1.

The tandem foot rest unit 30 is a unit for supporting the feet of the passenger who sits in the seat 6. The passenger can sit in the seat 6 in a stable posture by resting the feet on the tandem foot rest unit 30. Next, the configuration of the tandem foot rest unit 30 will be described.

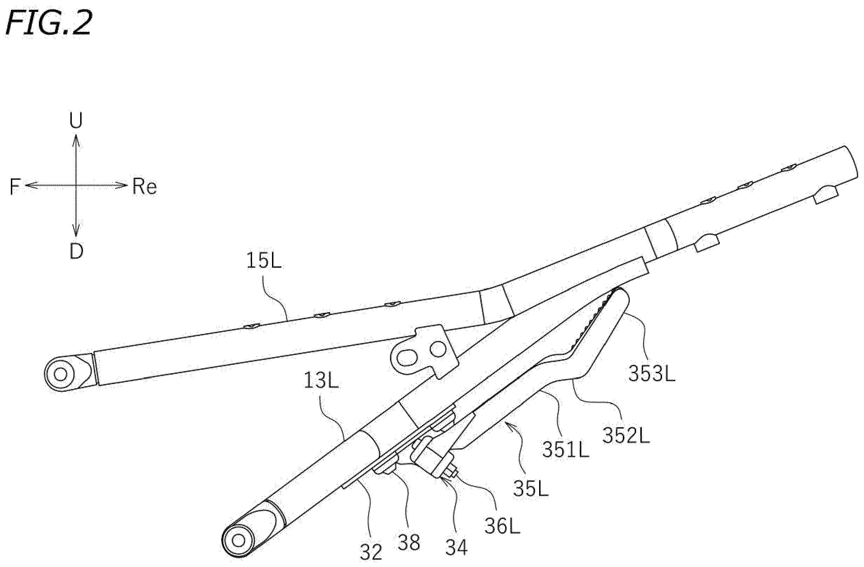

FIG. 2, FIG. 3, FIG. 4 and FIG. 5 are a left side view, a back view, a bottom view and a perspective view, respectively, showing the tandem foot rest unit 30, etc. As shown in FIG. 2 to FIG. 5, the tandem foot rest unit 30 includes a bracket 34, a left tandem foot rest 35L supported on a left end portion 34L of the bracket 34, and a right tandem foot rest 35R supported on a right end portion 34R of the bracket 34. The left tandem foot rest 35L is rotatably linked to the bracket 34 by a left link shaft 36L. The right tandem foot rest 35R is rotatably linked to the bracket 34 by a right link shaft 36R. The left tandem foot rest 35L and the right tandem foot rest 35R are rotatably supported on the bracket 34.

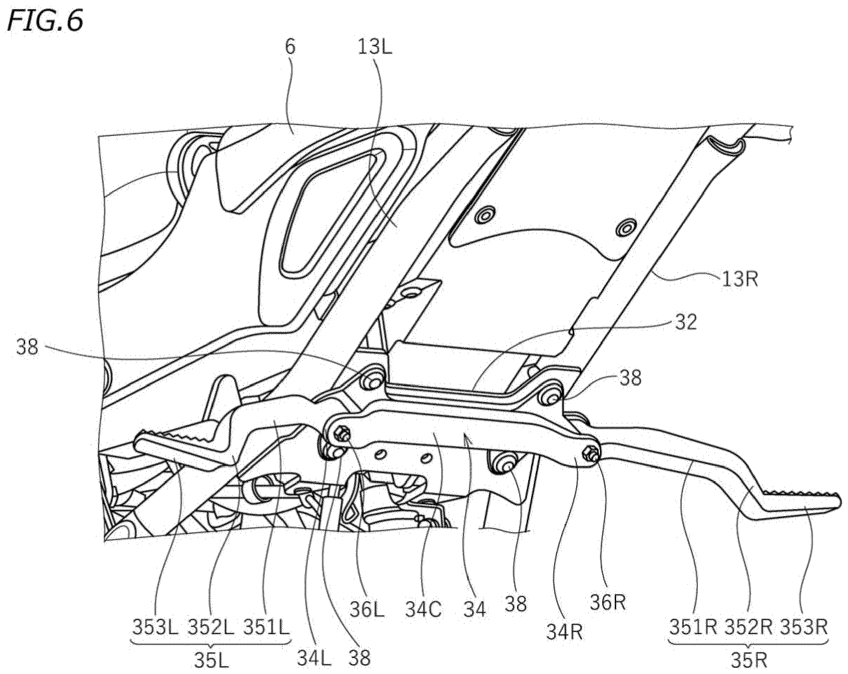

The left tandem foot rest 35L and the right tandem foot rest 35R are each configured to be rotatable between the retracted position, in which it extends rearward, and the deployed position, in which it extends sideward. FIG. 2 to FIG. 5 represent a state where the left tandem foot rest 35L and the right tandem foot rest 35R are in the retracted position. FIG. 6 is a perspective view showing the tandem foot rest unit 30, etc., when the left tandem foot rest 35L and the right tandem foot rest 35R are in the deployed position.

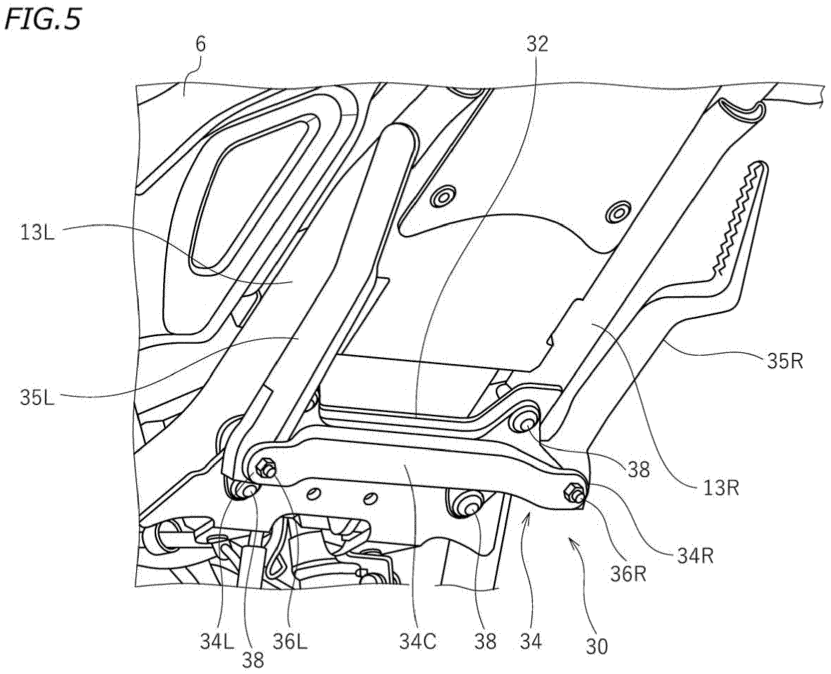

As shown in FIG. 5, the tandem foot rest unit 30 is supported on the left seat frame 13L and the right seat frame 13R. While the tandem foot rest unit 30 may be supported directly on the left seat frame 13L and the right seat frame 13R, the tandem foot rest unit 30 is herein supported indirectly with a plate 32 therebetween.

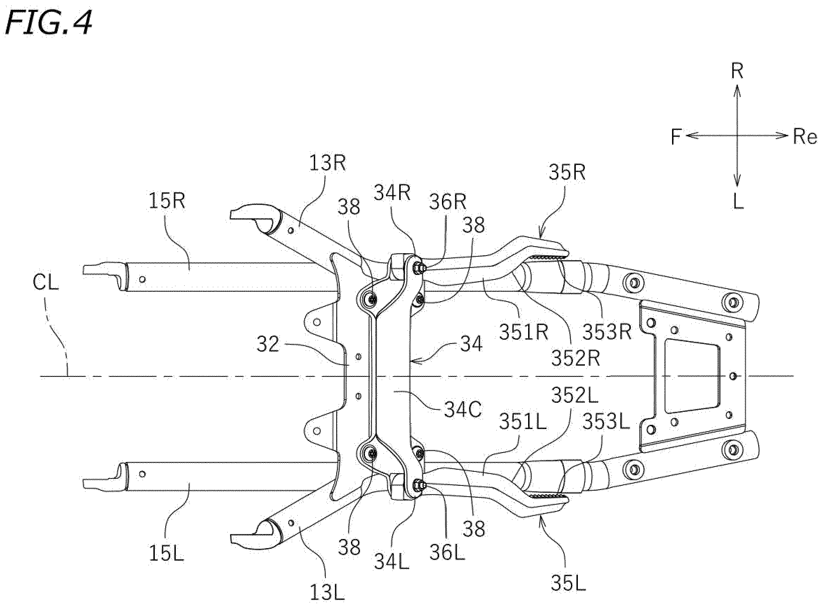

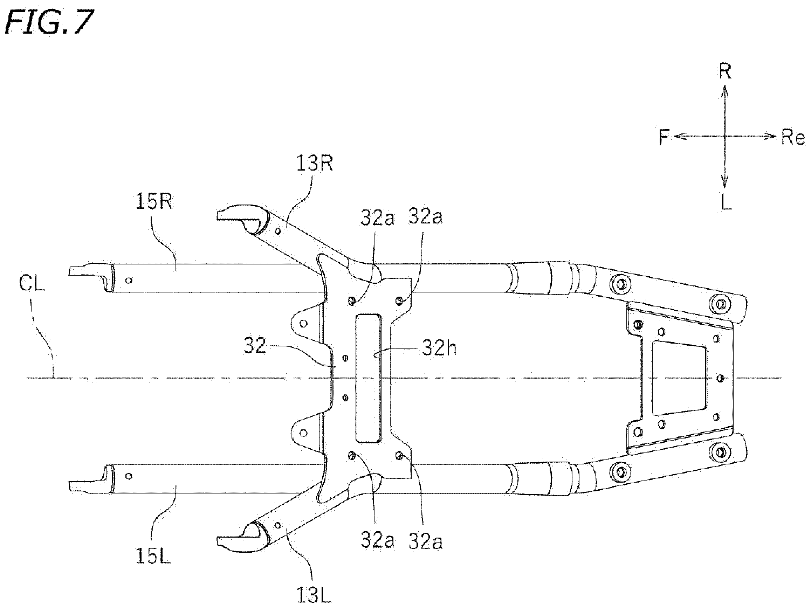

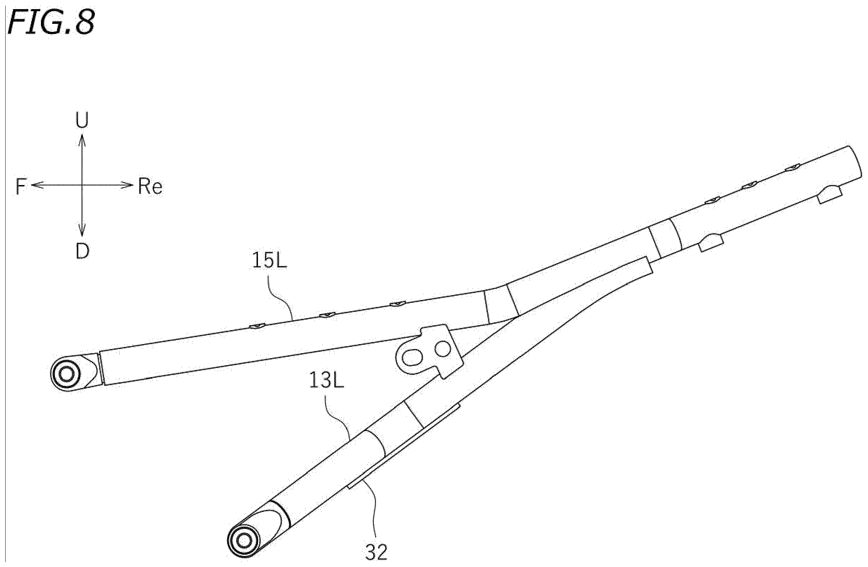

FIG. 7 is a view similar to FIG. 4, except that the tandem foot rest unit 30 is removed from the plate 32. FIG. 8 is a view similar to FIG. 2, except that the tandem foot rest unit 30 is removed from the plate 32. As shown in FIG. 7, the plate 32 is secured to the left seat frame 13L and the right seat frame 13R. Herein, the plate 32 is welded to the left seat frame 13L and the right seat frame 13R. Note however that there is no particular limitation on the method for securing the plate 32.

A plurality of holes 32a for fastening with bolts are formed in the plate 32. A through hole 32h is formed in the central portion of the plate 32. The hole 32h is formed rightward relative to the left seat frame 13L and leftward relative to the right seat frame 13R. The hole 32h extends left and right over the vehicle center line CL. The left edge of the hole 32h is located leftward relative to the vehicle center line CL, and the right edge of the hole 32h is located leftward relative to the vehicle center line CL. The hole 32h is an opening with a closed periphery.

As shown in FIG. 8, the plate 32 is arranged downward of the left seat frame 13L and the right seat frame 13R. The plate 32 is arranged parallel to the left seat frame 13L and the right seat frame 13R as the vehicle is viewed from the side.

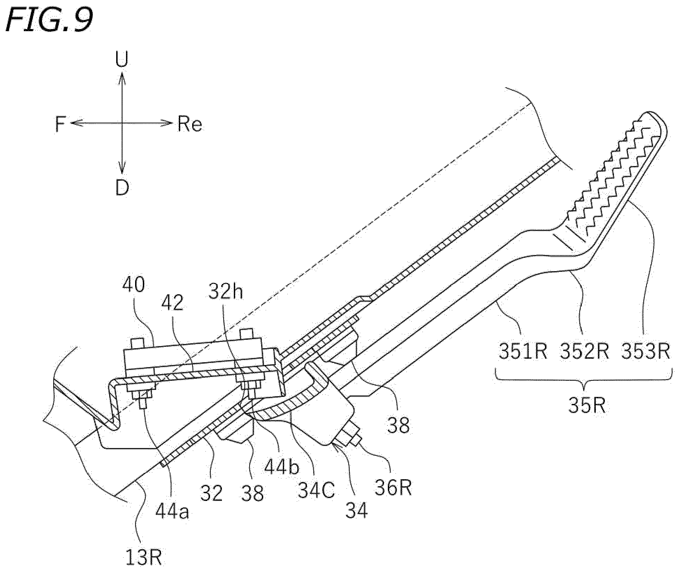

As shown in FIG. 9, an inertial measurement unit (hereinafter referred to as an "IMU") 40, which is an example of an electrical part, is arranged upward of the plate 32. The IMU 40 is supported on the left seat frame 13L and the right seat frame 13R. A bracket 42 is secured to the left seat frame 13L and the right seat frame 13R. The IMU 40 is secured to the bracket 42 by secure bolts 44a and 44b. The IMU 40 is supported indirectly on the left seat frame 13L and the right seat frame 13R with the bracket 42 therebetween. A portion of the secure bolt 44b is arranged inside the hole 32h of the plate 32.

As shown in FIG. 4, the bracket 34 of the tandem foot rest unit 30 is secured to the plate 32 by bolts 38. The bolts 38 are inserted into the holes 32a (see FIG. 7) of the plate 32. The bolts 38 extend upward and forward (see FIG. 2). The bolts 38 are attachable/removable. The bracket 34 is removably attached to the plate 32. The bracket 34 is removably supported on the left seat frame 13L and the right seat frame 13R with the plate 32 therebetween.

As shown in FIG. 9, the bracket 34 is arranged rearward and downward of the IMU 40. The bracket 34 covers the hole 32h of the plate 32 from below. As shown in FIG. 5, the bracket 34 has a central portion 34C that is recessed upward. The central portion 34C is located rightward of the left end portion 34L and leftward of the right end portion 34R. The central portion 34C is recessed upward relative to the left end portion 34L and the right end portion 34R.

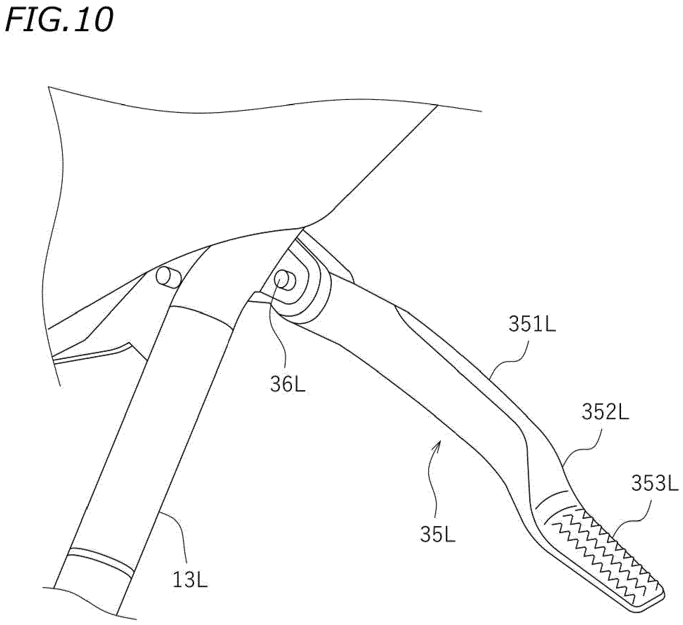

As shown in FIG. 10, the left tandem foot rest 35L includes a rod-shaped left arm portion 351L connected to the left link shaft 36L, a left footrest portion 353L for resting the left foot of the passenger, and a left stepped portion 352L located between the left arm portion 351L and the left footrest portion 353L. When the left tandem foot rest 35L is in the deployed position, the left stepped portion 352L extends downward from the left arm portion 351L toward the left footrest portion 353L. The left stepped portion 352L forms a wall portion extending upward from the left footrest portion 353L. Therefore, while the passenger is resting the left foot on the left footrest portion 353L, the left stepped portion 352L prevents the left foot from slipping up onto the left arm portion 351L. Although there is no particular limitation on the size of the left stepped portion 352L in the up-down direction, it is preferably 20 mm to 40 mm, and particularly preferably 25 mm to 35 mm, for example.

The right tandem foot rest 35R has a shape that is in left-right symmetry with the left tandem foot rest 35L. As shown in FIG. 6, the right tandem foot rest 35R includes a rod-shaped right arm portion 351R connected to the right link shaft 36R, a right footrest portion 353R for resting the right foot of the passenger, and a right stepped portion 352R located between the right arm portion 351R and the right footrest portion 353R. When the right tandem foot rest 35R is in the deployed position, the right stepped portion 352R extends downward from the right arm portion 351R toward the right footrest portion 353R. The right stepped portion 352R forms a wall portion extending upward from the right footrest portion 353R. Therefore, while the passenger is resting the right foot on the right footrest portion 353R, the right stepped portion 352R prevents the right foot from slipping up onto the right arm portion 351R. Although there is no particular limitation on the size of the right stepped portion 352R in the up-down direction, it is preferably 20 mm to 40 mm, and particularly preferably 25 mm to 35 mm, for example.

As shown in FIG. 2, when the left tandem foot rest 35L is in the retracted position, the left arm portion 351L is arranged parallel to the left seat frame 13L as the vehicle is viewed from the side. Similarly, when the right tandem foot rest 35R is in the retracted position, the right arm portion 351R is arranged parallel to the right seat frame 13R as the vehicle is viewed from the side.

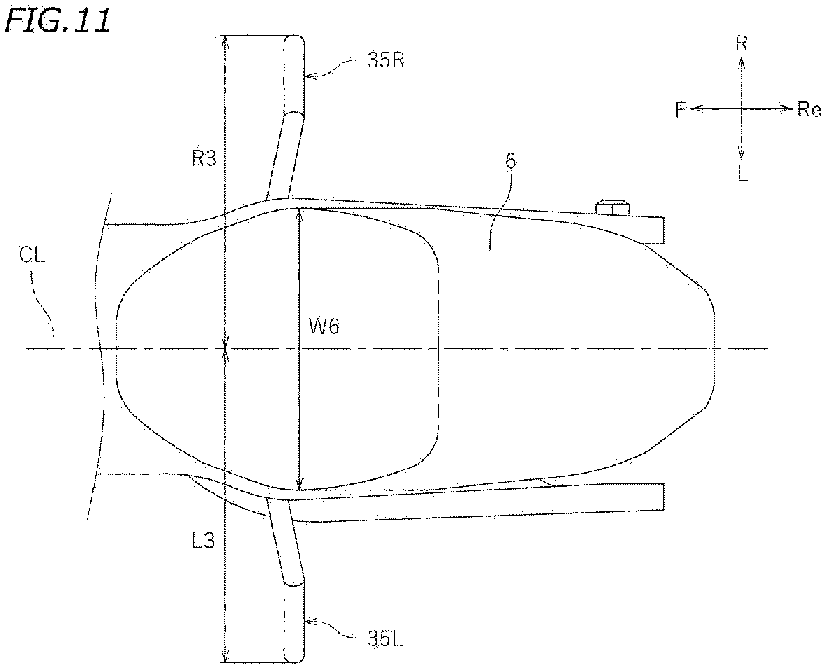

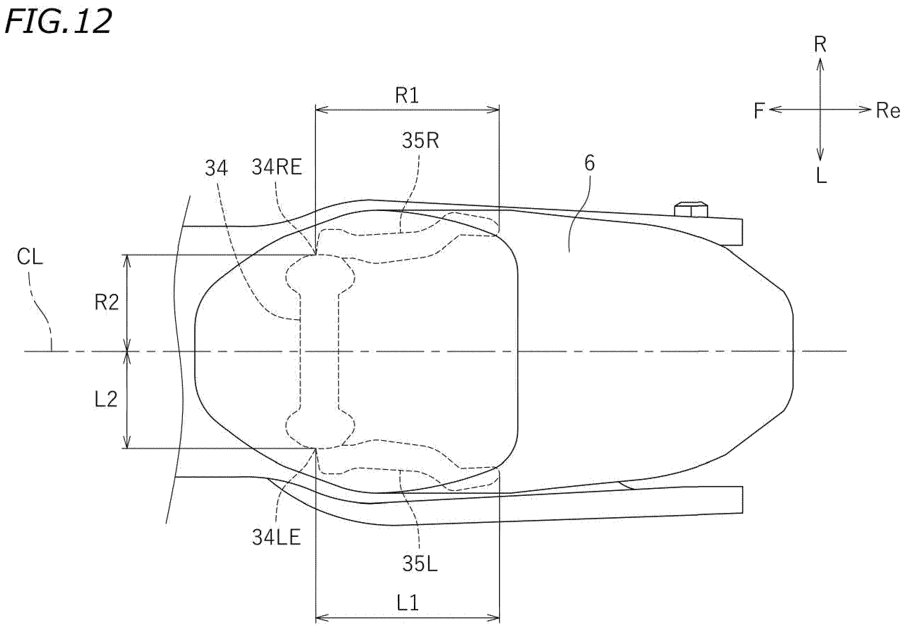

FIG. 11 is a plan view showing the seat 6 and the tandem foot rest unit 30 when the left tandem foot rest 35L and the right tandem foot rest 35R are in the deployed position. FIG. 12 is a plan view showing the seat 6 and the tandem foot rest 30 when the left tandem foot rest 35L and the right tandem foot rest 35R are in the retracted position.

As shown in FIG. 12, when the left tandem foot rest 35L and the right tandem foot rest 35R are in the retracted position, the entirety of the left tandem foot rest 35L and the entirety of the right tandem foot rest 35R overlap with the seat 6 as the vehicle is viewed from above. When the left tandem foot rest 35L and the right tandem foot rest 35R are in the retracted position, the left tandem foot rest 35L and the right tandem foot rest 35R are hidden by the seat 6 as the motorcycle 1 is viewed from above. When the left tandem foot rest 35L and the right tandem foot rest 35R are in the retracted position, the left tandem foot rest 35L and the right tandem foot rest 35R do not protrude leftward and rightward relative to the seat 6.

With the tandem foot rest unit 30 according to the present embodiment, the left tandem foot rest 35L and the right tandem foot rest 35R are relatively long. As the vehicle is viewed from above, the length L1 of the left tandem foot rest 35L is longer than the distance L2 between the vehicle center line CL and the left end 34LE of the bracket 34. As the vehicle is viewed from above, the length R1 of the right tandem foot rest 35R is longer than the distance R2 between the vehicle center line CL and the right end 34RE of the bracket 34.

As shown in FIG. 11, when the left tandem foot rest 35L is in the deployed position, the distance L3 between the tip of the left tandem foot rest 35L and the vehicle center line CL is equal to or greater than the lateral width W6 of the seat 6 as the vehicle is viewed from above. Note that the lateral width of the seat 6 varies depending on the position in the front-rear direction of the seat 6. The lateral width W6 of the seat 6, as used herein, refers to the maximum value of the lateral width of the seat 6. Similarly, when the right tandem foot rest 35R is in the deployed position, the distance R3 between the tip of the right tandem foot rest 35R and the vehicle center line CL is equal to or greater than the lateral width W6 of the seat 6 as the vehicle is viewed from above.

As shown in FIG. 1, the motorcycle 1 includes a rear fender 24. At least a portion of the rear fender 24 is located upward of the rear wheel 4. The tandem foot rest unit 30 is formed as a separate part from the rear fender 24. The rear fender 24 is arranged rearward relative to the bracket 34 of the tandem foot rest unit 30. The rear fender 24 is spaced apart from the bracket 34. The tandem foot rest unit 30 can be removed without removing the rear fender 24.

The motorcycle 1 is configured as described above. Next, how the tandem foot rest unit 30 is used will be described.

When the passenger sits in the seat 6, the left tandem foot rest 35L and the right tandem foot rest 35R are deployed into the deployed position (see FIG. 6 and FIG. 11). That is, the left tandem foot rest 35L is positioned so as to extend leftward and the right tandem foot rest 35R is positioned so as to extend rightward. Thus, the passenger, who sits in the seat 6, can rest the left foot on the left tandem foot rest 35L and rest the right foot on the right tandem foot rest 35R.

When no passenger sits in the seat 6, the left tandem foot rest 35L and the right tandem foot rest 35R are be retracted into the retracted position (see FIG. 5 and FIG. 12). When the left tandem foot rest 35L and the right tandem foot rest 35R are in the deployed position, the left tandem foot rest 35L and the right tandem foot rest 35R can be retracted into the retracted position by rotating the left tandem foot rest 35L and the right tandem foot rest 35R toward the rear side. By retracting the left tandem foot rest 35L and the right tandem foot rest 35R into the retracted position, the left tandem foot rest 35L and the right tandem foot rest 35R no longer protrude leftward and rightward.

Where the tandem foot rest unit 30 is not needed, the tandem foot rest unit 30 can be removed. When the bolts 38 are removed, the bracket 34 can be removed from the plate 32. Since the left tandem foot rest 35L and the right tandem foot rest 35R are supported on the common bracket 34, the left tandem foot rest 35L and the right tandem foot rest 35R can be removed together by removing the bracket 34.

Next, various effects realized by the present embodiment will be described. The tandem foot rest unit 30 of the motorcycle 1 according to the present embodiment includes the bracket 34 attachably/removably supported on the left seat frame 13L and the right seat frame 13R, the left tandem foot rest 35L supported on the left end portion 34L of the bracket 34, and the right tandem foot rest 35R supported on the right end portion 34R of the bracket 34. The left tandem foot rest 35L and the right tandem foot rest 35R are supported on the common bracket 34. Therefore, as compared with a case where separate brackets provided for the left tandem foot rest 35L and the right tandem foot rest 35R, it is possible to reduce the number of parts and reduce the sizes of the configuration. According to the present embodiment, only by attaching/removing the bracket 34 to/from the left seat frame 13L and the right seat frame 13R, the left tandem foot rest 35L and the right tandem foot rest 35R can be attached/removed together. This makes it easier to attach/remove the left tandem foot rest 35L and the right tandem foot rest 35R. Therefore, according to the present embodiment, it is possible to realize the motorcycle 1, with which it is possible to prevent the structure for attaching the left tandem foot rest 35L and the right tandem foot rest 35R from becoming large, and it is easy to attach/remove the left tandem foot rest 35L and the right tandem foot rest 35R.

According to the present embodiment, the bracket 34 is removably attached to the plate 32 secured to the left seat frame 13L and the right seat frame 13R. The bracket 34 is secured to the left seat frame 13L and the right seat frame 13R with the plate 32 therebetween. The bracket 34 can be attached/removed to/from the left seat frame 13L and the right seat frame 13R only by attaching/removing the bracket 34 to/from the plate 32. This makes it easier to attach/remove the bracket 34.

As shown in FIG. 8, the plate 32 is arranged downward of the left seat frame 13L and the right seat frame 13R. The plate 32 is arranged parallel to the left seat frame 13L and the right seat frame 13R as the vehicle is viewed from the side. The plate 32 does not protrude downward. Therefore, it is possible to arrange the tandem foot rest unit 30 in a compact arrangement. When the tandem foot rest unit 30 is removed, there is no projections protruding downward from the left seat frame 13L and the right seat frame 13R. When the tandem foot rest unit 30 is removed, it is possible to ensure a sufficient space downward of the left seat frame 13L and the right seat frame 13R.

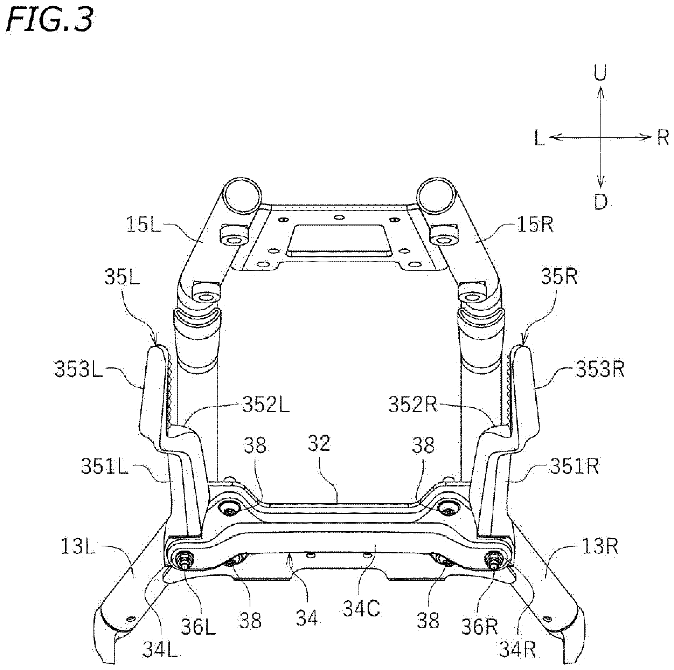

According to the present embodiment, the bracket 34 is secured to the plate 32 by the bolts 38. The bolts 38 extend upward. The bolts 38 for securing the bracket 34 do not protrude left and right (see FIG. 3). Therefore, it is possible to arrange the tandem foot rest unit 30 in a compact arrangement.

According to the present embodiment, a relatively large hole 32h is formed in the central portion of the plate 32 (see FIG. 7). Therefore, it is possible to reduce the weight of the plate 32. It is possible to reduce the weight of the tandem foot rest unit 30.

According to the present embodiment, the bracket 34 covers the hole 32h of the plate 32 from below (see FIG. 9). Therefore, the bracket 34 can prevent mud, etc., rolled up from the road surface from passing through the hole 32h of the plate 32 to enter the space above.

As shown in FIG. 9, the motorcycle 1 according to the present embodiment includes the IMU 40 supported on the left seat frame 13L and the right seat frame 13R, and the secure bolt 44b securing the IMU 40. A portion of the secure bolt 44b is arranged inside the hole 32h of the plate 32. Therefore, the plate 32 does not need to be arranged more downward in order to avoid the secure bolt 44b. As the plate 32 can be arranged relatively upward, it is possible to arrange the tandem foot rest unit 30 in a compact arrangement.

According to the present embodiment, the bracket 34 is arranged rearward and downward of the IMU 40. Therefore, the bracket 34 can prevent mud, etc., rolled up from the road surface from sticking to the IMU 40.

According to the present embodiment, the central portion 34C of the bracket 34 is recessed upward relative to the left end portion 34LE and the right end portion 34RE (see FIG. 5). Therefore, it is possible to ensure a sufficient clearance between the rear wheel 4 and the bracket 34.

According to the present embodiment, the entirety of the bracket 34 overlaps with the seat 6 as the vehicle is viewed from above, as shown in FIG. 12. The bracket 34 does not protrude leftward and rightward relatively to the seat 6. It is possible to arrange the tandem foot rest unit 30 in a compact arrangement.

According to the present embodiment, the left tandem foot rest 35L and the right tandem foot rest 35R are each configured to be rotatable between the retracted position, in which it extends rearward, and the deployed position, in which it extends sideward. When no passenger rides, the left tandem foot rest 35L and the right tandem foot rest 35R can be retracted in the retracted position so that the left tandem foot rest 35L and the right tandem foot rest 35R no longer interfere. When a passenger rides, the left tandem foot rest 35L and the right tandem foot rest 35R can be deployed into the deployed position so that the passenger can ride with the feet resting on the left tandem foot rest 35L and the right tandem foot rest 35R.

According to the present embodiment, as shown in FIG. 12, when the left tandem foot rest 35L and the right tandem foot rest 35R are in the retracted position, the entirety of the left tandem foot rest 35L and the entirety of the right tandem foot rest 35R overlap with the seat 6 as the vehicle is viewed from above. When the left tandem foot rest 35L and the right tandem foot rest 35R are retracted in the retracted position, the left tandem foot rest 35L does not protrude leftward relative to the seat 6, and the right tandem foot rest 35R does not protrude rightward relative to the seat 6. The left tandem foot rest 35L and the right tandem foot rest 35R are unlikely to interfere.

According to the present embodiment, the left tandem foot rest 35L includes the left stepped portion 352L located between the left arm portion 351L and the left footrest portion 353L (see FIG. 10). The right tandem foot rest 35R includes the right stepped portion 352R located between the right arm portion 351R and the right footrest portion 353R. With the left stepped portion 352L, it is possible to prevent the left foot of the passenger resting on the left footrest portion 353L from moving onto the left arm portion 351L. With the right stepped portion 352R, it is possible to prevent the right foot of the passenger resting on the right footrest portion 353R from moving onto the right arm portion 351R. Therefore, it is easy for the passenger to maintain a proper posture.

According to the present embodiment, as shown in FIG. 2, when the left tandem foot rest 35L and the right tandem foot rest 35R are in the retracted position, the left arm portion 351L is arranged parallel to the left seat frame 13L and the right arm portion 351R is arranged parallel to the right seat frame 13R as the vehicle is viewed from the side. Therefore, the left tandem foot rest 35L and the right tandem foot rest 35R can be retracted in a compact arrangement.

According to the present embodiment, as shown in FIG. 12, the length L1 of the left tandem foot rest 35L is longer than the distance L2 between the vehicle center line CL and the left end 34LE of the bracket 34 as the vehicle is viewed from above. As the vehicle is viewed from above, the length R1 of the right tandem foot rest 35R is longer than the distance R2 between the vehicle center line CL and the right end 34RE of the bracket 34. Although the bracket 34 is arranged close to the vehicle center line CL in the present embodiment, the left tandem foot rest 35L and the right tandem foot rest 35R are relatively long. Therefore, it is easy for the passenger to rest the feet on the left tandem foot rest 35L and the right tandem foot rest 35R. It is easy for the passenger to take a proper posture.

While one embodiment has been described above, the embodiment is merely an example. Various other embodiments are possible.

The bracket 34 of the tandem foot rest unit 30 may in a not claimed example be supported directly on the left seat frame 13L and the right seat frame 13R. For example, the bracket 34 may be removably attached to the left seat frame 13L and the right seat frame 13R by bolts.

There is no particular limitation on the shape and the arrangement of the plate 32. The plate 32 does in a not claimed example not need to be arranged parallel to the left seat frame 13L and the right seat frame 13R as the vehicle is viewed from the side.

The bolts 38 for securing the bracket 34 to the plate 32 do not need to extend upward. For example, the left end portion and the right end portion of the plate 32 may bend downward, with the bolts 38 fastened to the left end portion and the right end portion, extending leftward or rightward.

The bracket 34 does not need to cover the hole 32h of the plate 32 from below. The hole 32h does not need to be formed in the central portion of the plate 32.

The electrical part supported on the left seat frame 13L and the right seat frame 13R is not limited to the IMU 40. Note that the electrical part refers to a piece of electronic equipment that transmits or receives electric signals. The bracket 34 does not need to be arranged rearward and downward of the electrical part.

The central portion 34C of the bracket 34 does not need to be recessed upward relative to the left end portion 34L and the right end portion 34R.

The entirety of the bracket 34 does not need to overlap with the seat 6 as the vehicle is viewed from above. When the left tandem foot rest 35L and the right tandem foot rest 35R are in the retracted position, the entirety of the left tandem foot rest 35L and the entirety of the right tandem foot rest 35R do not need to overlap with the seat 6 as the vehicle is viewed from above.

The left stepped portion 352L of the left tandem foot rest 35L and the right stepped portion 352R of the right tandem foot rest 35R may be optional.

When the left tandem foot rest 35L is in the retracted position, the left arm portion 351L does not need to be arranged parallel to the left seat frame 13L as the vehicle is viewed from the side. When the right tandem foot rest 35R is in the retracted position, the right arm portion 351R does not need to be arranged parallel to the right seat frame 13R as the vehicle is viewed from the side.

As the vehicle is viewed from above, the length L1 of the left tandem foot rest 35L may be less than or equal to the distance L2 between the vehicle center line CL and the left end 34LE of the bracket 34. As the vehicle is viewed from above, the length R1 of the right tandem foot rest 35R may be less than or equal to the distance R2 between the vehicle center line CL and the right end 34RE of the bracket 34.

The drive source that generates a driving force for running the motorcycle 1 is not limited to the internal combustion engine 5. The drive source may be an electric motor.

Note that a straddled vehicle refers to a vehicle that is straddled by the rider. The straddled vehicle is not limited to the motorcycle 1. The straddled vehicle may be an auto tricycle, an ATV (All Terrain Vehicle), or a snowmobile, for example.

### Reference Signs List

1: Motorcycle (straddled vehicle), 4: Rear wheel, 6: Seat, 13L: Left seat frame, 13R: Right seat frame, 24: Rear fender, 30: Tandem foot rest unit, 32: Plate, 32h: Hole, 34: Bracket, 34C: Central portion of bracket, 34L: Left end portion of bracket, 34R: Right end portion of bracket, 35L: Left tandem foot rest, 35R: Right tandem foot rest, 36L: Left link shaft, 36R: Right link shaft, 38: Bolt, 40: IMU (electrical part), 44b: Secure bolt, 351 L: Left arm portion, 352L: Left stepped portion, 353L: Left footrest portion, 351R: Right arm portion, 352R: Right stepped portion, 353R: Right footrest portion

## Claims

1. A straddled vehicle (1) comprising:
a left seat frame (13L) extending rearward with regard to a front-rear vehicle direction (F-Re) and upward with regard to an up-down vehicle direction (U-D);
a right seat frame (13R) arranged rightward of the left seat frame (13L) with regard to a left-right vehicle direction (L-R) and extending rearward with regard to the front-rear vehicle direction (F-Re) and upward with regard to the up-down vehicle direction (U-D);
a seat (6) supported on the left seat frame (13L) and the right seat frame (13R); and a tandem foot rest unit (30) supported on the left seat frame (13L) and the right seat frame (13R) for supporting feet of a passenger who sits in the seat (6), wherein:
the tandem foot rest unit (30) includes:
a bracket (34) including a left end portion (34L) and a right end portion (34R) with regard to the left-right vehicle direction (L-R) and attachably/removably supported on the left seat frame (13L) and the right seat frame (13R);
a left tandem foot rest (35L) supported on the left end portion (34L) of the bracket (34); and
a right tandem foot rest (35R) supported on the right end portion (34R) of the bracket (34), **characterized by**
a plate (32) secured to the left seat frame (13L) and the right seat frame (13R), wherein the bracket (34) is removably attached to the plate (32), wherein the plate (32) is arranged downward of the left seat frame (13L) and the right seat frame (13R) with regard to the up-down vehicle direction (U-D), and is arranged parallel to the left seat frame (13L) and the right seat frame (13R) as the vehicle is viewed from the side.

2. The straddled vehicle (1) according to claim 1, **characterized in that** the bracket (34) is secured to the plate (32) by a bolt (38) extending upward with regard to the up-down vehicle direction (U-D).

3. The straddled vehicle (1) according to claim 1 or 2, **characterized in that:**
a hole (32h) is formed in a central portion of the plate (32); or
a hole (32h) is formed in a central portion of the plate (32) and the bracket (34) covers the hole (32h) of the plate (32) from below with regard to the up-down vehicle direction (U-D).

4. The straddled vehicle (1) according to claim 3, **characterized by:**
an electrical part (40) supported on the left seat frame (13L) and the right seat frame (13R); and
a secure bolt (44b) that secures the electrical part (40),
wherein a portion of the secure bolt (44b) is arranged inside the hole (32h) of the plate (32).

5. The straddled vehicle (1) according to any one of claims 1 to 3, **characterized by** an electrical part (40) supported on the left seat frame (13L) and the right seat frame (13R),
wherein the bracket (34) is arranged rearward with regard to the front-rear vehicle direction (F-Re) and downward with regard to the up-down vehicle direction (U-D) of the electrical part (40).

6. The straddled vehicle according to any one of claims 1 to 5, **characterized in that:**
the bracket (34) includes a central portion (34C) located rightward of the left end portion (34L) of the bracket (34) and leftward of the right end portion (34R) of the bracket (34) with regard to the left-right vehicle direction (L-R); and
the central portion (34C) is recessed upward with regard to the up-down vehicle direction (U-D) relative to the left end portion (34L) and the right end portion (34R).

7. The straddled vehicle (1) according to any one of claims 1 to 6, **characterized in that** an entirety of the bracket (34) overlaps with the seat (6) as the vehicle is viewed from above.

8. The straddled vehicle (1) according to any one of claims 1 to 7, **characterized in that:**
the tandem foot rest unit (30) includes:
a left link shaft (36L) rotatably linking the left tandem foot rest (35L) to the left end portion (34L) of the bracket (34); and
a right link shaft (36R) rotatably linking the right tandem foot rest (35R) to the right end portion (34R) of the bracket (34),
wherein the left tandem foot rest (35L) and the right tandem foot rest (35R) are configured to be rotatable between a retracted position, in which the left tandem foot rest (35L) and the right tandem foot rest (35R) extend rearward with regard to the left-right vehicle direction (L-R), and a deployed position, in which the left tandem foot rest (35L) and the right tandem foot rest (35R) extend sideward in the left-right vehicle direction (L-R).

9. The straddled vehicle according to claim 8, **characterized in that** when the left tandem foot rest (35L) and the right tandem foot rest (35R) are in the retracted position, an entirety of the left tandem foot rest (35L) and an entirety of the right tandem foot rest (35R) overlap with the seat (6) as the vehicle is viewed from above.

10. The straddled vehicle (1) according to claim 8 or 9, **characterized in that:**
the left tandem foot rest (35L) includes a rod-shaped left arm portion (351L) connected to the left link shaft (36L), a left footrest portion (353L) for resting a foot of the passenger, and a left stepped portion (352L) located between the left arm portion (351L) and the left footrest portion (353L);
the right tandem foot rest (35R) includes a rod-shaped right arm portion (351R) connected to the right link shaft (36R), a right footrest portion (353R) for resting a foot of the passenger, and a right stepped portion (352R) located between the right arm portion (351R) and the right footrest portion (353R);
the left stepped portion (352L) extends downward with regard to the up-down vehicle direction (U-D) from the left arm portion (351L) toward the left footrest portion (353L) when the left tandem foot rest (35L) is in the deployed position; and
the right stepped portion (352R) extends downward with regard to the up-down vehicle direction (U-D) from the right arm portion (351R) toward the right footrest portion (353R) when the right tandem foot rest (35R) is in the deployed position.

11. The straddled vehicle (1) according to claim 10, **characterized in that** when the left tandem foot rest (35L) and the right tandem foot rest (35R) are in the retracted position, the left arm portion (351L) is arranged parallel to the left seat frame (13L) and the right arm portion (351R) is arranged parallel to the right seat frame (13R) as the vehicle is viewed from the side.

12. The straddled vehicle (1) according to any one of claims 1 to 11, **characterized in that:**
a length (L1) of the left tandem foot rest (35L) is longer than a distance (L2) between a vehicle center line (CL) and a left end (34LE) of the bracket (34) as the vehicle is viewed from above; and
a length (R1) of the right tandem foot rest (35R) is longer than a distance (R2) between the vehicle center line (CL) and a right end (34RE) of the bracket (34) as the vehicle is viewed from above.

13. The straddled vehicle (1) according to any one of claims 1 to 12, **characterized by:**
a rear wheel (4); and
a rear fender (24) at least a portion of which is located upward of the rear wheel (4) with regard to the up-down vehicle direction (U-D),
wherein the rear fender (24) is arranged rearward relative to the bracket (34) with regard to the front-rear vehicle direction (F-Re) and spaced apart from the bracket (34).

## Patentansprüche

1. Ein Spreiz-Sitz-Fahrzeug (1), das umfasst:
einen linken Sitzrahmen (13L), der sich nach hinten in Bezug auf eine Vorder-Rück-Fahrzeugrichtung (F-Re) und nach oben in Bezug auf eine Oben-Unten-Fahrzeugrichtung (U-D) erstreckt;
einen rechten Sitzrahmen (13R), der rechts von dem linken Sitzrahmen (13L) in Bezug auf eine Links-Rechts-Fahrzeugrichtung (L-R) angeordnet ist und sich nach hinten in Bezug auf die Vorder-Rück-Fahrzeugrichtung (F-Re) und nach oben in Bezug auf die Oben-Unten-Fahrzeugrichtung (U-D) erstreckt;
einen Sitz (6), der auf dem linken Sitzrahmen (13L) und dem rechten Sitzrahmen (13R) gelagert ist; und
eine Tandem-Fußstützeneinheit (30), die an dem linken Sitzrahmen (13L) und dem rechten Sitzrahmen (13R) gelagert ist, zum Stützen der Füße eines Passagiers, der auf dem Sitz (6) sitz, wobei:
die Tandem-Fußstützeneinheit (30) enthält:
einen Träger (34), der einen linken Endabschnitt (34L) und einen rechten Endabschnitt (34R) in Bezug auf die Links-Rechts-Fahrzeugrichtung (L-R) enthält, und an dem linken Sitzrahmen (13L) und dem rechten Sitzrahmen (13R) anbringbar/abnehmbar gelagert ist;
eine linke Tandem-Fußstütze (35L), die auf dem linken Endabschnitt (34L) des Trägers (34) gelagert ist; und
eine rechte Tandem-Fußstütze (35R), die auf dem rechten Endabschnitt (34R) des Trägers (34) gelagert ist, **gekennzeichnet durch**
eine Platte (32), die am linken Sitzrahmen (13L) und am rechten Sitzrahmen (13R) befestigt ist,
wobei der Träger (34) abnehmbar an der Platte (32) befestigt ist, wobei die Platte (32) unterhalb des linken Sitzrahmens (13L) und des rechten Sitzrahmens (13R) in Bezug auf die Oben-Unten-Fahrzeugrichtung (U-D) angeordnet ist und parallel zu dem linken Sitzrahmen (13L) und dem rechten Sitzrahmen (13R) angeordnet ist, wenn das Fahrzeug von der Seite betrachtet wird.

2. Das Spreiz-Sitz-Fahrzeug (1) gemäß Anspruch 1, **dadurch gekennzeichnet, dass** der Träger (34) an der Platte (32) durch einen Bolzen (38) befestigt ist, der sich in Bezug auf die Oben-Unten-Fahrzeugrichtung (U-D) nach oben erstreckt.

3. Das Spreiz-Sitz-Fahrzeug (1) gemäß Anspruch 1 oder 2, **dadurch gekennzeichnet, dass:**
ein Loch (32h) in einem Zentralabschnitt der Platte (32) ausgebildet ist; oder
ein Loch (32h) in einem Zentralabschnitt der Platte (32) ausgebildet ist und der Träger (34) das Loch (32h) der Platte (32) von unten in Bezug auf die Auf-Ab-Fahrzeugrichtung (U-D) abdeckt.

4. Das Spreiz-Sitz-Fahrzeug (1) gemäß Anspruch 3, **gekennzeichnet durch:**
ein elektrisches Teil (40), das an dem linken Sitzrahmen (13L) und dem rechten Sitzrahmen (13R) angebracht ist; und
einen Sicherungsbolzen (44b), der das elektrische Teil (40) sichert,
wobei ein Abschnitt des Sicherungsbolzens (44b) innerhalb des Lochs (32h) der Platte (32) angeordnet ist.

5. Das Spreiz-Sitz-Fahrzeug (1) gemäß irgendeinem der Ansprüche 1 bis 3, **gekennzeichnet durch** ein elektrisches Teil (40), das an dem linken Sitzrahmen (13L) und dem rechten Sitzrahmen (13R) angebracht ist,
wobei der Träger (34) nach hinten in Bezug auf die Vorder-Rück-Fahrzeugrichtung (F-Re) und nach unten in Bezug auf die Oben-Unten-Fahrzeugrichtung (U-D) des elektrischen Teils (40) angeordnet ist.

6. Das Spreiz-Sitz-Fahrzeug gemäß irgendeinem der Ansprüche 1 bis 5, **dadurch gekennzeichnet, dass:**
der Träger (34) einen Zentralabschnitt (34C) enthält, der rechts von dem linken Endabschnitt (34L) des Trägers (34) und links von dem rechten Endabschnitt (34R) des Trägers (34) in Bezug auf die Links-Rechts-Fahrzeugrichtung (L-R) angeordnet ist; und
der Zentralabschnitt (34C) nach oben ausgenommen ist, in Bezug auf die Oben-Unten-Fahrzeugrichtung (U-D) relativ zum linken Endabschnitt (34L) und zum rechten Endabschnitt (34R).

7. Das Spreiz-Sitz-Fahrzeug (1) gemäß irgendeinem der Ansprüche 1 bis 6, **dadurch gekennzeichnet, dass** sich der gesamte Träger (34) mit dem Sitz (6) bei Betrachtung des Fahrzeugs von oben überlappt.

8. Das Spreiz-Sitz-Fahrzeug (1) gemäß irgendeinem der Ansprüche 1 bis 7, **dadurch gekennzeichnet, dass:**
die Tandem-Fußstützeneinheit (30) enthält:
eine linke Verbindungswelle (36L), welche die linke Tandem-Fußstütze (35L) drehbar mit dem linken Endabschnitt (34L) des Trägers (34) verbindet; und
eine rechte Verbindungswelle (36R), welche die rechte Tandem-Fußstütze (35R) drehbar mit dem rechten Endabschnitt (34R) des Trägers (34) verbindet, wobei die linke Tandem-Fußstütze (35L) und die rechte Tandem-Fußstütze (35R) konfiguriert sind, um zwischen einer eingefahrenen Position, in der sich die linke Tandem-Fußstütze (35L) und die rechte Tandem-Fußstütze (35R) in Bezug auf die Links-Rechts-Fahrzeugrichtung (L-R) nach hinten erstrecken, und einer ausgefahrenen Position, in der sich die linke Tandem-Fußstütze (35L) und die rechte Tandem-Fußstütze (35R) seitlich in der Links-Rechts-Fahrzeugrichtung (L-R) erstrecken, drehbar zu sein.

9. Das Spreiz-Sitz-Fahrzeug gemäß Anspruch 8, **dadurch gekennzeichnet, dass,** wenn die linke Tandem-Fußstütze (35L) und die rechte Tandem-Fußstütze (35R) in der eingefahrenen Position sind, die gesamte linke Tandem-Fußstütze (35L) und die gesamte rechte Tandem-Fußstütze (35R) bei Betrachtung des Fahrzeugs von oben mit dem Sitz (6) überlappen.

10. Das Spreiz-Sitz-Fahrzeug (1) gemäß Anspruch 8 oder 9, **dadurch gekennzeichnet, dass:**
die linke Tandem-Fußstütze (35L) einen stabförmigen linken Armabschnitt (351L), der mit der linken Verbindungswelle (36L) verbunden ist, einen linken Fußstützenabschnitt (353L) zum Abstützen eines Fußes des Passagiers und einen linken abgestuften Abschnitt (352L), der zwischen dem linken Armabschnitt (351L) und dem linken Fußstützenabschnitt (353L) angeordnet ist, enthält;
die rechte Tandem-Fußstütze (35R) einen stabförmigen rechten Armabschnitt (351R), der mit der rechten Verbindungswelle (36R) verbunden ist, einen rechten Fußstützenabschnitt (353R) zum Abstützen eines Fußes des Passagiers und einen rechten abgestuften Abschnitt (352R), der zwischen dem rechten Armabschnitt (351R) und dem rechten Fußstützenabschnitt (353R) angeordnet ist, enthält;
der linke abgestufte Abschnitt (352L) sich in Bezug auf die Oben-Unten-Fahrzeugrichtung (U-D) von dem linken Armabschnitt (351L) in Richtung des linken Fußstützenabschnitts (353L) erstreckt, wenn die linke Tandem-Fußstütze (35L) in der ausgefahrenen Position ist; und
der rechte abgestufte Abschnitt (352R) sich in Bezug auf die Oben-Unten-Fahrzeugrichtung (U-D) vom rechten Armabschnitt (351R) zum rechten Fußstützenabschnitt (353R) erstreckt, wenn die rechte Tandem-Fußstütze (35R) in der ausgefahrenen Position ist.

11. Das Spreiz-Sitz-Fahrzeug (1) gemäß Anspruch 10, **dadurch gekennzeichnet, dass,** wenn die linke Tandem-Fußstütze (35L) und die rechte Tandem-Fußstütze (35R) in der eingefahrenen Position sind, der linke Armabschnitt (351L) parallel zum linken Sitzrahmen (13L) und der rechte Armabschnitt (351R) parallel zum rechten Sitzrahmen (13R) angeordnet ist, wenn das Fahrzeug von der Seite betrachtet wird.

12. Das Spreiz-Sitz-Fahrzeug (1) gemäß irgendeinem der Ansprüche 1 bis 11, **dadurch gekennzeichnet, dass:**
eine Länge (L1) der linken Tandem-Fußstütze (35L) größer ist als ein Abstand (L2) zwischen einer Fahrzeugmittellinie (CL) und einem linken Ende (34LE) des Trägers (34), wenn das Fahrzeug von oben betrachtet wird; und
eine Länge (R1) der rechten Tandem-Fußstütze (35R) größer ist als ein Abstand (R2) zwischen der Fahrzeugmittellinie (CL) und einem rechten Ende (34RE) des Trägers (34), wenn das Fahrzeug von oben betrachtet wird.

13. Das Spreiz-Sitz-Fahrzeug (1) gemäß irgendeinem der Ansprüche 1 bis 12, **gekennzeichnet durch:**
ein Hinterrad (4); und
einen hinteren Kotflügel (24), von dem zumindest ein Abschnitt in Bezug auf die Oben-Unten-Fahrzeugrichtung (U-D) oberhalb des Hinterrads (4) angeordnet ist,
wobei der hintere Kotflügel (24) relativ zum Träger (34) nach hinten in Bezug auf die Vorder-Rück-Fahrzeugrichtung (F-Re) angeordnet und von des Trägers (34) beabstandet ist.

## Revendications

1. Véhicule à selle (1) comprenant :
un cadre de siège gauche (13L) s'étendant vers l'arrière par rapport à la direction avant arrière du véhicule (F - Re) et par rapport à la direction haut bas du véhicule (U - D),
un cadre de siège droit (13R) disposé à la droite du cadre de siège gauche (13L) par rapport à la direction gauche droite du véhicule (L - R) et s'étendant vers l'arrière par rapport à la direction avant arrière du véhicule (F - Re) et vers le haut par rapport à la direction haut bas du véhicule (U - D),
un siège (6) supporté sur le cadre de siège gauche (13L) et sur le cadre de siège droit (13R), et
une unité de repose pied biplace (30) supportée sur le cadre de siège gauche (13L) et sur le cadre de siège droit (13R) afin de supporter les pieds d'un passager assis sur le siège (6), où :
l'unité de repose pied biplace (30) inclut :
un support (34) incluant une extrémité gauche (34L) et une extrémité droite (34R) par rapport à la direction gauche droite du véhicule (L - R) et supporté en pouvant être fixé/libéré sur le cadre de siège gauche (13L) et le cadre de siège droit (13R),
un repose pied biplace gauche (35L) supporté sur l'extrémité gauche (34L) du support (34), et
un repose pied biplace droit (35R) supporté sur l'extrémité droite (34R) du support (34), **caractérisé par** :
une plaque (32) immobilisée sur le cadre de siège gauche (13L) et sur le cadre de siège droit (13R), le support (34) étant fixé à la plaque (32) en étant libérable, la plaque (32) étant disposée en dessous du cadre de siège gauche (13L) et du cadre de siège droit (13R) par rapport à la direction haut bas du véhicule (U - D) et étant disposée parallèlement au cadre de siège gauche (13L) et au cadre de siège droit (13R) lorsque l'on regarde le véhicule par côté.

2. Véhicule à selle (1) selon la revendication 1, **caractérisé en ce que** le support (34) est immobilisé sur la plaque (32) par un boulon (38) s'étendant vers le haut par rapport à la direction haut bas du véhicule (U - D).

3. Véhicule à selle (1) selon la revendication 1 ou la revendication 2, **caractérisé en ce que** :
un alésage (32h) est formé dans la partie centrale de la plaque (32), ou
un alésage (32h) est formé dans la partie centrale de la plaque (32) et le support (34) recouvre l'alésage (32h) de la plaque (32) par dessous par rapport à la direction haut bas du véhicule (U - D).

4. Véhicule à selle (1) selon la revendication 3, **caractérisé par** :
un composant électrique (40) supporté sur le cadre de siège gauche (13L) et sur le cadre de siège droit (13R), et
un boulon de sécurité (44b) qui immobilise le composant électrique (40),
dans lequel une partie du boulon de sécurité (44b) est disposée à l'intérieur de l'alésage (32h) de la plaque (32).

5. Véhicule à selle (1) selon l'une quelconque des revendications 1 à 3, **caractérisé par** un composant électrique (40) supporté sur le cadre de siège gauche (13L) et sur le cadre de siège droit (13R),
dans lequel le support (34) est disposé vers l'arrière, par rapport à la direction avant arrière du véhicule (F - Re), et vers le bas, par rapport à la direction haut bas du véhicule (U - D), du composant électrique (40).

6. Véhicule à selle (1) selon l'une quelconque des revendications 1 à 5, **caractérisé en ce que** :
le support (34) inclut une partie centrale (34C) située à la droite de l'extrémité gauche (34L) du support (34) et à la gauche de l'extrémité droite (34R) du support (34) par rapport à la direction gauche droite du véhicule (L - R), et
la partie centrale (34C) est en retrait vers le haut par rapport à la direction haut bas du véhicule (U - D) par rapport à l'extrémité gauche (34L) et à l'extrémité droite (34R).

7. Véhicule à selle (1) selon l'une quelconque des revendications 1 à 6, **caractérisé en ce que** la totalité du support (34) chevauche le siège (6) lorsque l'on regarde le véhicule par dessus.

8. Véhicule à selle (1) selon l'une quelconque des revendications 1 à 7, **caractérisé en ce que** :
l'unité de repose pied biplace (30) inclut :
un axe de liaison gauche (36L) reliant par rotation le repose pied biplace gauche (35L) à l'extrémité gauche (34L) du support (34), et
un axe de liaison droit (36R) reliant par rotation le repose pied biplace droit (35R) à l'extrémité droite (34R) du support (34),
dans lequel le repose pied biplace gauche (35L) et le repose pied biplace droit (35R) sont configurés pour pouvoir tourner entre une position rétractée, dans laquelle le repose pied biplace gauche (35L) et le repose pied biplace droit (35R) s'étendent vers l'arrière par rapport à la direction gauche droite du véhicule (L - R), et une position déployée, dans laquelle le repose pied biplace gauche (35L) et le repose pied biplace droit (35R) s'étendent latéralement dans la direction gauche droite du véhicule (L - R).

9. Véhicule à selle (1) selon la revendication 8, **caractérisé en ce que,** lorsque le repose pied biplace gauche (35L) et le repose pied biplace droit (35R) sont en position rétractée, la totalité du repose pied biplace gauche (35L) et la totalité du repose pied biplace droit (35R) chevauchent le siège (6) lorsque l'on regarde véhicule par dessus.

10. Véhicule à selle (1) selon la revendication 8 ou la revendication 9, **caractérisé en ce que** :
le repose pied biplace gauche (35L) inclut un bras gauche en forme de tige (351L) relié à l'axe de liaison gauche (36L), un repose pied gauche (353L) où repose un pied du passager et un épaulement gauche (352L) situé entre le bras gauche (351L) et le repose pied gauche (353L),
le repose pied biplace droit (35R) inclut un bras droit en forme de tige (351R) relié à l'axe de liaison droit (36R), un repose pied droit (353R) où repose un pied du passager et un épaulement droit (352R) situé entre le bras droit (351R) et le repose pied droit (353R),
l'épaulement gauche (352L) s'étend vers le bas par rapport à la direction haut bas du véhicule (U - D) en direction du repose pied gauche (353L) lorsque le repose pied biplace gauche (35L) est en position déployée, et
l'épaulement droit (352R) s'étend vers le bas par rapport à la direction haut bas du véhicule (U - D) en direction du repose pied droit (353R) lorsque le repose pied biplace droit (35R) est en position déployée.

11. Véhicule à selle (1) selon la revendication 10, **caractérisé en ce que,** lorsque le repose pied biplace gauche (35L) et le repose pied biplace droit (35R) sont en position rétractée, le bras gauche (351L) est disposé parallèlement au cadre de siège gauche (13L) et le bras droit (351R) est disposé parallèlement au cadre de siège droit (13R) lorsque l'on regarde véhicule par le côté.

12. Véhicule à selle (1) selon l'une quelconque des revendications 1 à 11, **caractérisé en ce que** :
la longueur (L1) du repose pied biplace gauche (35L) est plus longue qu'une distance (L2) entre l'axe central du véhicule (CL) et l'extrémité gauche (34LE) du support (34) lorsque l'on regarde le véhicule par dessus, et
la longueur (R1) du repose pied biplace droit (35R) est plus longue qu'une distance (R2) entre l'axe central du véhicule (CL) et l'extrémité droite (34RE) du support (34) lorsque l'on regarde le véhicule par dessus.

13. Véhicule à selle (1) selon l'une quelconque des revendications 1 à 12, **caractérisé par** :
une roue arrière (4), et
un garde-boue arrière (24) dont au moins une partie est située en haut de la roue arrière (4) par rapport à la direction haut bas du véhicule (U - D),
dans lequel le garde-boue arrière (24) est disposé à l'arrière par rapport au support (34) par rapport à la direction avant arrière du véhicule (F - Re), et il est espacé du support (34).
